# EUROPEAN PATENT SPECIFICATION

(11) **EP 2 908 041 B1**
(45) Date of publication and mention of the grant of the patent: **26.09.2018**
(21) Application number: 15155096.9
(22) Date of filing: 13.02.2015
(51) Int. Cl.: F16L 21/00, F16L 25/14, F16L 27/107, F16L 55/163, F16L 21/02

(54) **A PIPE COUPLING**
ROHRKOPPLUNG
RACCORD DE TUYAU

(30) Priority: 14.02.2014 GB 201402664
(43) Date of publication of application: 19.08.2015
(73) Proprietor: Flex-Seal Couplings Limited, Barnsley, South Yorkshire S73 0UW (GB)
(72) Inventor: Milnes, David, Rotherham, South Yorkshire S60 3EL (GB)
(74) Representative: Wilson Gunn

(56) References cited:
- EP-A1- 2 362 128
- WO-A2-2011/025935
- US-A- 4 346 922
- US-A- 4 927 189

## Description

### Technical Field of the Invention

The present invention relates to a pipe coupling. In particular, the present invention relates to a pipe coupling adapted to couple together pipes having dissimilar exterior profiles, external reinforcement of the exterior profile or an uneven, worn or distorted exterior profile.

### Background to the Invention

A typical pipe coupling comprises an elastomeric sleeve adapted to receive internally a pair of abutting pipe ends. Around the outside of the sleeve are typically provided one or more circumferential clamping bands provided with adjustment means allowing the bands to be tightened or loosened as required. Tightening the bands draws them tightly against the outside of the elastomeric sleeve. As such the sleeve is urged into contact with the pipe ends and a secure seal is formed.

Whilst couplings of the above type provide effective coupling in many situations, there are a number of situations for which they are not suitable. One example is where pipe are used with a circular interior profile and a non-circular exterior profile, as is common in continental Europe or where pipes have otherwise dissimilar exterior profiles. A second example is where a pipe is provided with spiral wound reinforcing ribs on its exterior profile. A further example is where one or both pipes have an uneven, worn, damaged or distorted exterior surface.

US4927189 discloses an internal expansion coupling for joining together two pipes. The coupling comprises (a) an elongated open ended tubular joint member formed of a sheet member, where the sheet ends overlap such that the end portions lie contiguous with each other; (b) a continuous elastomeric sleeve overlapping the sheet sides wall of a tubular member; and (c) means for expanding said sheet whereby said sheet ends move circumferentially towards one another urging said elastomeric sleeve against the inside wall of a tubular member. Whilst this does provide an internal coupling for pipes, the present design can have some limitations in the range of compensation provided and in adapting to situations where the pipes have different internal diameters.

It is therefore an object of the present invention to provide a pipe coupling that at least partially overcomes or alleviates the above problems.

### Summary of the Invention

According to the present invention there is provided a pipe coupling comprising: an elastomeric sleeve; and an adjustable clamping band wherein the elastomeric sleeve has a substantially tubular body and sealing flaps provided at each end of the body, the sealing flaps overlapping the outer surface of the body to define a partially enclosed channel; and wherein the adjustable clamping band is provided in the channel defined between the body and the sealing flaps, and is adjustable to press outwardly on said sealing flaps characterised in that the coupling is provided with bushing means comprising a sleeve of elastomeric material adapted to fit within the interior of one of the sealing flaps or a sleeve of elastomeric material adapted to fit around the tubular body of the elastomeric sleeve.

In this manner, the coupling of the present invention is adapted to be received internally by a pair of abutting pipe ends. Adjustment of the clamping band can then urge the sealing flaps into contact with the interior profile of the pipe ends, thereby forming a secure seal. As such, the pipe coupling of the present invention can be used to couple together pipes having dissimilar, reinforced, uneven, worn, damaged or distorted exterior profiles. The bushing means of this arrangement is particularly advantageous when adapting the coupling to a small difference in pipe diameter.

The adjustable clamping band comprises an elongate planar strip, the ends of the strip being connected by an adjustment means. Alternatively, the band may comprise two or more elongate strips connected together end to end by adjustment means at each connection. In a further alternative, two or more strips may be provided in parallel to each other and connected at their ends by common or separate adjustment means. The adjustment means are operable to tighten the band by drawing the opposing ends of the band together or lengthen the band by pushing the opposing ends of the band apart. The adjustment means may have any suitable form. In particular, the adjustment means may comprise any of: screws, cams, lever devices, hydraulic devices, pneumatic devices, ratchets, threaded bolts, toggles, wedges or the like.

The opposing ends of the clamping band may be provided with substantially reciprocating features. In particular, the reciprocating features at each end may comprise one or more fingers. In such embodiments, the one or more fingers on each end are adapted to mutually interleave. In this manner, the outward pressure on the flaps can be maintained relatively evenly as the band is lengthened. Each finger may have a substantially equal shape. Alternatively, fingers at different points of the edge may have different forms.

The reciprocating formations may be machined directly into the band. Alternatively, the reciprocating formations may be formed on a separate substrate bonded to the band.

The clamping band is preferably adapted to have a width substantially matching the width of the channel defined by the flaps and outer surface of the body. Alternatively, one or more additional elongate planar strips may be provided alongside the clamping band within the channel. The one or more additional planar strips can provide additional support for the coupling, particularly if the width of the clamping band is less than the width of the channel. The one or more additional planar strips may be connected together end to end by suitable joining means or adjustment means. Alternatively, the one or more additional planar strips may simply overlap at their ends.

The clamping band may be formed of any suitable material including but not limited to: metal, composite, mesh, perforated plate, expanded sheet, carbon fibre, plastics, polymer materials or the like. In particular, suitable metals include but not limited to: steel, stainless steel, galvanised steel, powder bonded steel, painted steel, powder coated steel, hardened steel, tempered steel, aluminium or the like.

The flaps may be provided with gripping formations on the outer surface. The gripping formations may be substantially circumferential. Alternatively, the gripping formations may be substantially axial in orientation. In a further embodiment, the gripping formations may be orientated in other directions and/or a combination of directions, with or without intersections as desired or appropriate. The gripping formations may comprise one or more ridges. The ridges may have any suitable cross-sectional profile. In particular, the cross-sectional profile may be triangular, semicircular or multi-faceted.

The flaps preferably extend around the full circumference of the body. The opposing edges of each flap may have a substantially matching form. In a preferred embodiment, each flap has a substantially plain opposing edge. In alternative embodiments, each flap may have differing edge forms.

The flaps may be of substantially matching axial extent. The flaps may be of substantially matching thickness. The flaps may have substantially matching gripping formations. In this manner, the coupling may be used reversibly for coupling together pipes of matching interior profiles. In further embodiments, the flaps may have differing thicknesses or differing gripping formations. This can enable the coupling to be used to couple together pipes of different interior profiles. In further embodiments, one or both flaps may be provided with bushing means to enable the coupling to be used to couple together pipes of different interior profiles. Suitable bushing means may comprise a sleeve of elastomeric material adapted to fit around one of the sealing flaps. The bushing means may comprise one or more surface formations adapted to correspond to any gripping formations provided on the flaps. In particular, the bushing means may have matching gripping formations on an outer surface and/or reciprocal formations on an inner surface.

The bushing means may be retained in position by friction. In some embodiments, the bushing means may be retained in position by fixing means. The fixing means may comprise a mechanical joint, a weld (by heat, solvent or otherwise) or an adhesive. The use of such fixing means can enhance the stability of the seal by helping to restrict movement of the bushing means under load, including over pressure within the coupled pipes or relative movement between the coupled pipes.

The tubular body may have a substantially contiguous inner profile. This can help minimise disruption to flow within the pipe junction provided by the coupling. The ends of the sleeve may be sloped. This further helps to minimise disruption to flow within the pipe junction provided by the coupling.

The sleeve may be formed from any suitable material. In particular, the sleeve may be formed from materials including but not limited to: rubber, plastics, polyurethane, EPDM (ethylene propylene diene monomer), nitrile rubber, polyvinylchloride, SBR (styrene-butadiene rubber), silicone or the like.

The elastomeric sleeve and adjustable clamping band may be manufactured separately and subsequently fitted together. Alternatively, the elastomeric sleeve may be formed in position around the adjustable clamping band.

According to a second aspect of the present invention there is provided a pipe coupling comprising: an elastomeric sleeve; and an adjustable clamping band wherein the elastomeric sleeve has a substantially tubular body and sealing flaps provided at each end of the body, the sealing flaps overlapping the outer surface of the body to define a partially enclosed channel; and wherein the adjustable clamping band is provided in the channel defined between the body and the sealing flaps, and is adjustable to press outwardly on said sealing flaps characterised in that the coupling is provided with bushing means comprising a sleeve of elastomeric material adapted to fit around one of the sealing flaps and adapted to correspond to any gripping formations provided on the flaps..

According to a third aspect of the present invention there is provided a bushing means suitable for use in a pipe coupling according to the first aspect of the present invention, the bushing means comprising: a sleeve of elastomeric material adapted to fit within the interior of one of the sealing flaps or a sleeve of elastomeric material adapted to fit around the tubular body of the elastomeric sleeve.

According to a fourth aspect of the present invention there is provided a bushing means suitable for use in a pipe coupling according to the first aspect of the present invention, the bushing means comprising: a sleeve of elastomeric material adapted to fit around one of the sealing flaps of the elastomeric sleeve of the coupling and the bushing means provided with one or more surface formations adapted to correspond to any gripping formations provided on the flaps.

According to a fifth aspect of the present invention there is provided a kit of parts comprising at least one elastomeric sleeve according to the second aspect of the invention and at least one adjustable clamping band according to the third aspect of the present invention.

The sleeve of the second aspect of the present invention, adjustable clamping band of the third aspect of the present invention, bushing means of the fourth aspect of the present invention and kit of the fifth aspect of the present invention may incorporate any or all features of the first aspect of the present invention as desired or as required.

The kit of the fifth aspect of the present invention may further comprise one or more bushing means according to the fourth aspect of the present invention.

### Detailed Description of the Invention

In order that the invention may be more clearly understood an embodiment thereof will now be described, by way of example only, with reference to the accompanying drawings, of which:
- Figure 1: shows a pipe coupling without bushing means;
- Figure 2: shows a cross-sectional view of the elastomeric sleeve of the pipe coupling of figure 1;
- Figure 3: shows the adjustable clamping band of the pipe coupling of figure 1;
- Figure 4a: shows a first form of reciprocating fingers provided on the ends of the band of figure 3;
- Figure 4b: shows a second form of reciprocating fingers provided on the ends of the band of figure 3;
- Figure 5: shows the coupling of figure 1 in use to couple together two pipes of dissimilar exterior profiles;
- Figure 6a: shows the elastomeric sleeve of figure 2 fitted with external bushing means to adapt the coupling for use in coupling together pipes of a larger internal diameter;
- Figures 6b-d: show alterative external bushing means adapted for use when coupling a variety of different pipe diameters; and
- Figure 6e: shows the elastomeric sleeve of figure 2 fitted with internal bushing means to adapt the coupling for use in coupling together pipes of a larger internal diameter.

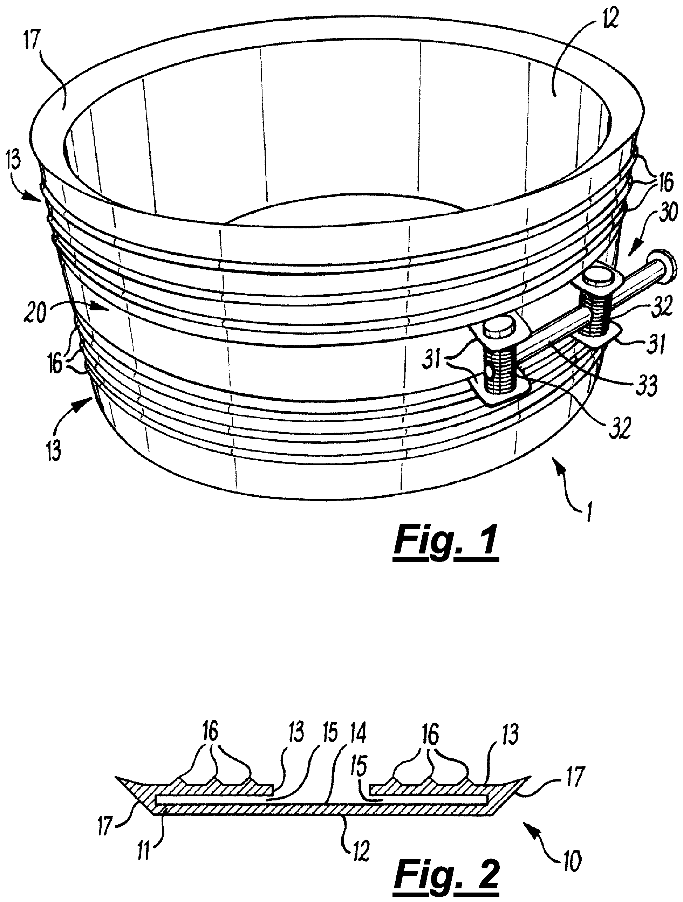

Turning now to figure 1, a pipe coupling 10 according to the present invention comprises an elastomeric sleeve 10 and a clamping band 20.

The elastomeric sleeve 10, as shown in figure 2, comprises a substantially tubular body 11 having a substantially contiguous interior surface 12. At each end of the body 11 are provided circumferential sealing flaps 13. The sealing flaps 13 overlap the outer surface 14 of the body 11 to define a partially enclosed channel 15 therebetween. The sealing flaps 13 are provided with a series of gripping ridges 16. The ends of the body 11 are sloped 17.

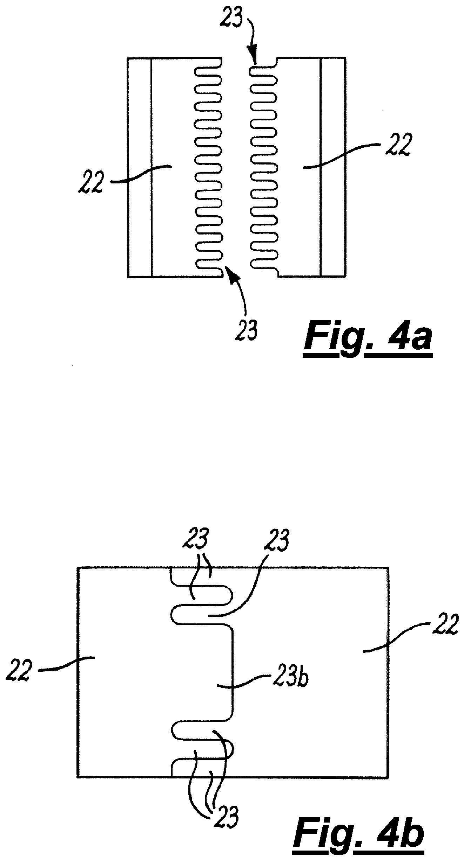

The clamping band comprises an elongate planar strip 21. The opposing ends 22 of the strip 21 are connected by adjustment means 30. In some embodiments, the clamping band may comprise two or more strips 21, joined together end to end by adjustment means 30. The adjustment means 30 are operable to tighten the band 20 by drawing the opposing ends 22 together or lengthen the band 20 by pushing the opposing ends 22 band apart. The ends 22 each comprise a plurality of fingers 23. The fingers 23 on the opposing ends 22 are adapted to interleave with one another. As is illustrated in figures 4a & 4b, the fingers may each have substantially equal sizes (fig 4a - fingers separated) or may have differing sizes (fig 4b - fingers abutting). In the embodiment of figure 4b, the larger central finger 23b enables an adjustment means 30 to be fitted close to the end of the band 20, whilst still allowing the remaining fingers 23 to interleave.

The adjustment means 30 comprises a pair of mounting brackets 31 provided upon the opposing ends of the band 20. The brackets 31 are each adapted to retain a locking bolt 32, each locking bolt 32 being provided with a transverse bore adapted to receive a connecting bolt 33, the bore of one locking bolt 32 being blind and the bore of the other locking bolt 32 being threaded. By rotating the connecting bolt 33, the locking bolts 32 pull on the brackets 31 and hence the opposing ends 22 of band 20 can be drawn together or pushed apart. Accordingly, the band 20 can be lengthened or tightened as required.

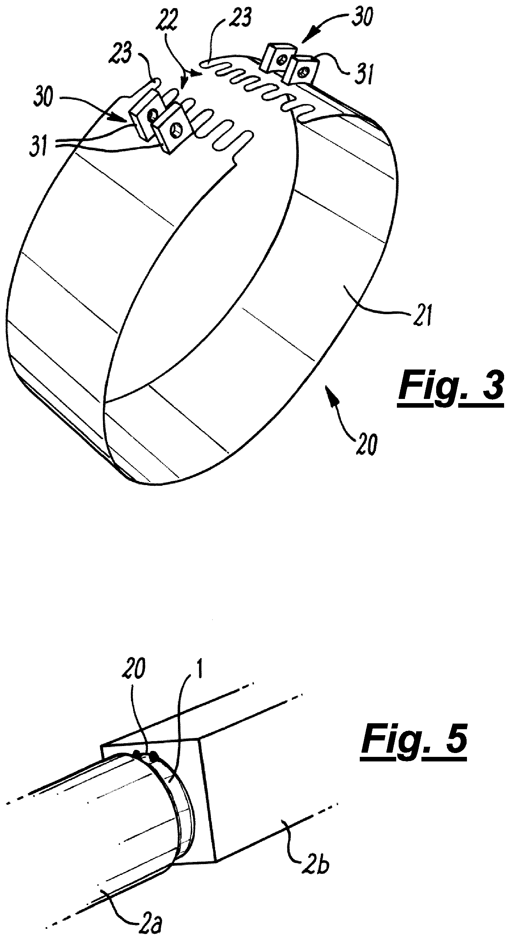

In use, as is illustrated in figure 5, the coupling 1 is inserted into the opposing ends of a pair of pipes 2a, 2b with dissimilar exterior profiles. The skilled man will however appreciate that this does not preclude the coupling 1 from being used to couple pipes having similar exterior profiles.

After insertion into the ends of pipes 2a, 2b the clamping band 20 is lengthened. As a result, the sealing flaps 13 are urged into contact with the interior profile of the pipes 2a, 2b. This creates a secure seal between the sealing flaps 13 and the pipes 2a, 2b. The provision of fingers 23 helps spread the pressure applied by the band 20 to the flaps 13 over the full circumference of the flaps 13 thereby improving the quality and reliability of the seal.

The gripping ridges 16 help improve the traction between the sealing flaps 13 and the pipes 2a, 2b. In addition, the gripping ridges 16 can also act as a series of successive sealing rings, preventing the escape of the pipe payload after coupling. By forming a secure seal on the interior profile of pipes 2a, 2b, the coupling 1 can be used to couple together pipes having dissimilar, reinforced, uneven, worn or distorted exterior profiles.

The substantially contiguous inner surface 12 of the sleeve 10, in combination with the sloped end portions 17, helps to minimise disturbance to the flow after installation of the coupling 1. A further benefit of the present coupling is that it provides for external adjustment of the seal by use of the adjustment means. This simplifies the process of installing or subsequently checking the coupling 1.

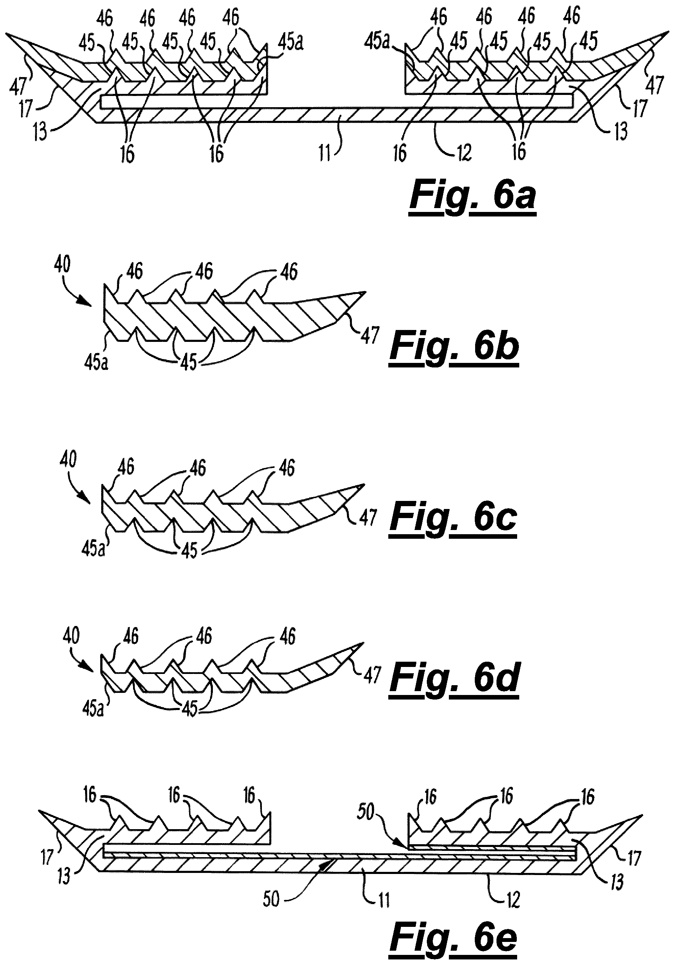

Turning now to figure 6a, the elastomeric sleeve 10 is provided with bushing means 40. The bushing means 40 comprise a sleeve of elastomeric material (typically the same material as the sleeve 10) adapted to fit around one of the flaps 13. In this manner, the elastomeric sleeve 10 and hence the coupling 1 may be adapted to fit pipes 2 with a larger interior profile.

In order to retain the advantages of the flaps 13 as described above, the bushing means 40 are provided with interior grooves 45 adapted to correspond to any gripping ridges 16 of the sleeve 10 and matching exterior gripping ridges 46 on the outer surface of the bushing means 40. To further enhance the security of the connection between the flap 13 and the bushing means 40, the gripping ridges 16 are spaced such that a gripping ridge is provided at the end of the overlapping part of flap 13 and a corresponding groove or, as is shown in figure 6, a bevelled end 45a is provided on the bushing means 40. The bushing means 40 is further provided with a sloped end portion 47 adapted to correspond to sloped end portion 17 of the sleeve 10.

Whilst the example of figure 6a shows like bushing means 40 fitted around each flap 13, the skilled man will appreciate that if it is desired to couple together pipes 2 having differing interior profiles one of the bushing means 40 may be omitted or bushing means 40 of differing thicknesses may be fitted around each flap 13. It is also possible for multiple bushing means 40 to be fitted around each flap 13, where appropriate. Since bushing means 40 of differing thicknesses each have corresponding interior grooves 45, gripping ridges 46 and sloped end portions 47 (as can be seen in figures 6b-6d), providing multiple bushing means 40 will not impair performance of the coupling 1 unduly. In addition to or as an alternative to the above, figure 6e shows the provision of thin bushing means 50 within the channel 15 of the elastomeric sleeve 10. Such thin bushing means 50 comprise a sleeve of elastomeric material adapted to fit within the interior of one of the sealing flaps 13 or a sleeve of elastomeric material adapted to fit around the tubular body 11 of the elastomeric sleeve. These thin bushing means 50 are advantageous when adapting the coupling 10 to a small difference in pipe diameter. The thin bushing means 50 are also relatively simpler to manufacture than bushing means 40 provided with interior grooves 45, gripping ridges 46 and sloped end portions 47, particularly as the overall thickness is reduced. As with the bushing means 40, the bushing means 50 may be provided for one flap 13 only if desired.

The bushing means 40, 50 may be retained in position by friction or by an additional fixing means. The additional fixing means might comprise a mechanical joint, a weld or an adhesive applied to the contact surfaces. The use of the additional fixing means may enhance the stability of the connection between the bushing means 40, 50 and the flap 13 or between successive bushing means 40, 50. In particular, this can aid the stability of the joint provided by the coupling in the case of over pressure within the coupled pipes or relative movement of the coupled pipes.

## Claims

1. A pipe coupling comprising: an elastomeric sleeve (10); and an adjustable clamping band (20) wherein the elastomeric sleeve (10) has a substantially tubular body (11) and sealing flaps (13) provided at each end of the body (11), the sealing flaps (13) overlapping the outer surface (14) of the body (11) to define a partially enclosed channel (15); and wherein the adjustable clamping band (20) is provided in the channel (15) defined between the body (11) and the sealing flaps (13), and is adjustable to press outwardly on said sealing flaps (13) **characterised in that** the coupling is provided with bushing means (50) comprising a sleeve of elastomeric material adapted to fit within the interior of one of the sealing flaps (13) or a sleeve of elastomeric material adapted to fit around the tubular body (11) of the elastomeric sleeve (10).

2. A pipe coupling as claimed in claim 1 wherein the adjustable clamping band (20) comprises an elongate planar strip (21), the ends (22) of the strip (21) being connected by an adjustment means (30).

3. A pipe coupling as claimed in any preceding claim wherein the opposing ends (22) of the clamping band (20) are provided with substantially reciprocating features (23).

4. A pipe coupling as claimed in any preceding claim wherein the flaps (13) are provided with gripping formations (16) on the outer surface.

5. A pipe coupling as claimed in any preceding claim wherein the flaps (13) extend around the full circumference of the body (11).

6. A pipe coupling as claimed in any preceding claim wherein the flaps (11) are of substantially matching axial extent.

7. A pipe coupling as claimed in any preceding claim wherein one or both sealing flaps (13) are provided with bushing means (40) comprising a sleeve of elastomeric material adapted to fit around one of the sealing flaps (13).

8. A pipe coupling as claimed in claim 7 wherein the bushing means (40) for the sealing flaps (13) comprise one or more surface formations (45, 46) adapted to correspond to any gripping formations (16) provided on the flaps.

9. A pipe coupling as claimed in claim 8 wherein the bushing means (40) for the sealing flaps have matching gripping formations (46) on an outer surface and/or reciprocal formations (45) on an inner surface.

10. A pipe coupling as claimed in any preceding claim wherein the bushing means (40, 50) are retained in position by friction.

11. A pipe coupling as claimed in any preceding claim wherein the bushing means (40, 50) are retained in position by a mechanical joint, a weld or an adhesive.

## Patentansprüche

1. Rohrkupplung aufweisend:
eine Elastomerhülse (10); und
ein einstellbares Klemmband (20), wobei die Elastomerhülse (10) im Wesentlichen einen rohrförmigen Körper (11) und Dichtflügel (13) hat, welche an jedem Ende des Körpers (11) vorgesehen sind, wobei die Dichtflügel (13) die Außenfläche (14) des Körpers (11) überlappen, um einen teilweise umschlossenen Kanal (15) zu bilden; und
wobei das einstellbare Klemmband (20) in dem Kanal (15) vorgesehen ist, welcher zwischen dem Körper (11) und den Dichtflügeln (13) definiert ist und einstellbar ist, um nach außen auf die Dichtflügel (13) zu drücken,
**dadurch gekennzeichnet,**
**dass** die Kupplung mit Buchsenmitteln (50) ausgestaltet ist, welche eine Hülse aus Elastomermaterial aufweisen, welche ausgestattet ist, in das Innere von einer der Dichtflügel (13) zu passen oder eine Hülse aus Elastomermaterial, welche ausgestatet ist, um in den rohrförmigen Körper (11) der Elastomerhülse (10) zu passen.

2. Rohrkupplung nach Anspruch 1, wobei das einstellbare Klemmband (20) einen länglichen ebenen Streifen (21) aufweist, wobei die Enden (22) des Streifens (21) durch ein Stellmittel (30) verbunden sind.

3. Rohrkupplung nach einem der vorherigen Ansprüche, wobei die gegenüberliegenden Enden (22) des Klemmbandes (11) mit im Wesentlichen entsprechenden Merkmalen ausgestattet sind.

4. Rohrkupplung nach einem der vorherigen Ansprüche, wobei die Flügel (30) mit Greifanordnungen (16) auf der äußeren Oberfläche ausgestattet sind.

5. Rohrkupplung nach einem der vorherigen Ansprüche, wobei die Flügel (13) sich um den gesamten Umfang des Körpers (11) erstrecken.

6. Rohrkupplungsanordnung nach einem der vorherigen Ansprüche, wobei die Flügel (13) eine im Wesentlichen übereinstimmende axiale Ausdehnung aufweisen.

7. Rohrkupplung nach einem der vorherigen Ansprüche, wobei einer oder beide Dichtflügel (13) mit Buchsenmitteln (40) ausgestattet sind, welche eine Hülse aus einem Elastomermaterial aufweisen und ausgestattet sind, um in einen der Dichtflügel (13) zu passen.

8. Rohrkupplung nach Anspruch 7, wobei die Buchsenmittel (40) für die Dichtflügel (13) eine oder mehrere Oberflächenformationen (45, 46) aufweisen, welche ausgestattet sind, mit jeglichen Greifformationen (16), welche auf den Flügeln vorgesehen sind, zu korrespondieren.

9. Rohrkupplung nach Anspruch 8, wobei die Buchsenmittel (40) für die Dichtflügel passende Greifformationen (46) auf einer äußeren Oberfläche und/oder reziproke Formationen (45) auf einer Innenfläche aufweisen.

10. Rohrkupplung nach einem der vorherigen Ansprüche, wobei die Buchsenmittel (40, 50) in ihrer Position durch Reibung gehalten werden.

11. Rohrkupplung nach einem der vorherigen Ansprüche, wobei die Buchsenmittel (40, 50) in ihrer Position durch eine mechanische Verbindung, eine Schweißung oder einen Klebstoff in Position gehalten werden.

## Revendications

1. Raccord de tuyau comportant : un manchon (10) élastomère; et une bande (20) de serrage ajustable, dans lequel le manchon (10) élastomère a un corps (11) sensiblement tubulaire et des rabats (13) d'étanchéité disposés à chaque extrémité du corps (11), les rabats (13) d'étanchéité chevauchant la surface (14) extérieure du corps (11) pour définir un canal (15) partiellement enfermé; et dans lequel la bande (20) de serrage ajustable est disposée dans le canal (15) défini entre le corps (11) et les rabats (13) d'étanchéité, et peut être ajustée pour presser vers l'extérieur sur les rabats (13) d'étanchéité, **caractérisé en ce que** le raccord est muni de moyens (50) formant douille comportant un manchon en matériau élastomère conçu pour s'adapter à l'intérieur de l'un des rabats (13) d'étanchéité ou un manchon en matériau élastomère conçu pour s'adapter autour du corps (11) tubulaire du manchon (10) élastomère.

2. Raccord de tuyau suivant la revendication 1, dans lequel la bande (20) de serrage ajustable comporte une bande (21) oblongue plane, les extrémités (22) de la bande (21) étant reliées par des moyens (30) d'ajustement.

3. Raccord de tuyau suivant l'une quelconque des revendications précédentes, dans lequel les extrémités (22) opposées de la bande (20) de serrage sont munies de particularités (23) sensiblement de forme complémentaire.

4. Raccord de tuyau suivant l'une quelconque des revendications précédentes, dans lequel les rabats (13) sont munis de formations (16) de prise sur la surface extérieure.

5. Raccord de tuyau suivant l'une quelconque des revendications précédentes, dans lequel les rabats (13) s'étendent autour de toute la circonférence du corps (11).

6. Raccord de tuyau suivant l'une quelconque des revendications précédentes, dans lequel les rabats (11) ont des extensions axiales sensiblement correspondantes.

7. Raccord de tuyau suivant l'une quelconque des revendications précédentes, dans lequel un ou les deux rabats (13) d'étanchéité sont munis de moyens (40) formant douille comportant un manchon en matériau élastomère conçu pour s'adapter autour de l'un des rabats (13) d'étanchéité.

8. Raccord de tuyau suivant la revendication 7, dans lequel les moyens (40) formant douille pour les rabats (13) d'étanchéité comportent une ou plusieurs formations (45, 46) de surface conçues pour correspondre à toutes formations (16) de prise disposées sur les rabats.

9. Raccord de tuyau suivant la revendication 8, dans lequel les moyens (40) formant douille pour les rabats d'étanchéité ont des formations (46) de prise correspondantes sur une surface extérieure et/ou des formations (45) de forme complémentaire sur une surface intérieure.

10. Raccord de tuyau suivant l'une quelconque des revendications précédentes, dans lequel les moyens (40, 50) formant douille sont maintenus en position par frottement.

11. Raccord de tuyau suivant l'une quelconque des revendications précédentes, dans lequel les moyens (40, 50) formant douille sont retenus en position par un joint mécanique, une soudure ou un adhésif.
